# EUROPÄISCHE PATENTANMELDUNG

(11) **EP 1 657 801 A2**
(43) Veröffentlichungstag der Anmeldung: **17.05.2006**
(21) Anmeldenummer: 05024339.3
(22) Anmeldetag: 08.11.2005
(51) Int. Cl.: H02K 1/27, H02K 15/03

(54) **Rotoranordnung für eine elektrische Maschine und Verfahren zur Herstellung einer Rotoranordnung**

(30) Priorität: 10.11.2004 DE 102004054277
(71) Anmelder: MINEBEA Co., Ltd., Kitasaku-gun, Nagano-ken 3849-2100 (JP)
(72) Erfinder: Hauger, Willi, 78050 Villingen-Schwenningen (DE)
(74) Vertreter: Liesegang, Eva

(57) **Zusammenfassung**

Rotoranordnung für eine elektrische Maschine mit einem im wesentlichen zylindrischen Rotorkörper und einer Welle, auf die der Rotorkörper aufgebracht ist, wobei der Rotorkörper in wenigstens einer die Wellenachse enthaltenden Ebene in mehrere im wesentlichen gleiche Rotorabschnitte aufgeteilt ist, und wobei der Umfang der Welle wenigstens einen Bereich zum Aufnehmen von Rotorabschnitten aufweist und die Rotorabschnitte in diesem Bereich

## Beschreibung

Die Erfindung betrifft eine Rotoranordnung für eine elektrische Maschine und ein Verfahren zum Herstellen einer Rotoranordnung. Die erfindungsgemäße Rotoranordnung kann in vielen Arten elektrischer Maschinen, wie Gleichstrommotoren und Generatoren, eingesetzt werden.

Ein bevorzugtes Anwendungsgebiet der Erfindung sind bürstenlose Gleichstrommotoren und andere Permanentmagnetmotoren. Bei solchen Motoren ist es grundsätzlich bekannt, Permanentmagnete auf dem Umfang eines Rotorrückschlusses vorzusehen oder in diesen einzubetten. Die Erfindung ist insbesondere anwendbar auf Elektromotoren oder Generatoren, welche als Innenläufermotor konfiguriert sind. Elektromotoren mit einer Innenläuferkonfiguration weisen einen Rotorrückschluß auf, der auf eine Welle aufgebracht ist, sowie einen oder mehrere Permanentmagnete, die auf den Rotorrückschluß aufgebracht oder in diesen eingebettet sind. Ferner umfassen die Motoren eine Statoranordnung aus z.B. einer Anzahl paketierter Metallbleche, die einen ringförmigen Statorrückschluß bilden, von dem Polschuhe nach innen abstehen. Auf die Polschuhe sind Phasenwicklungen aufgebracht. Die Rotoranordnung ist koaxial in die Statoranordnung eingefügt.

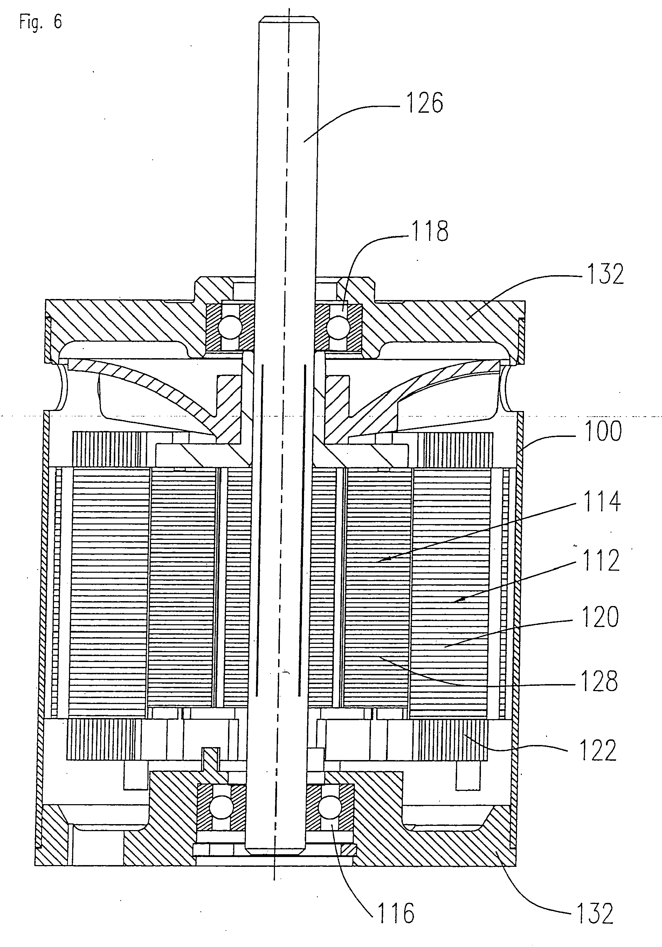

Fig. 6 zeigt grundsätzlich den Aufbau eines Elektromotors mit einem Gehäuse 100, in dem eine Statoranordnung 112, eine Rotoranordnung 114 sowie Lager 116, 118 zum drehbaren Lagern der Rotoranordnung aufgenommen sind. Die Statoranordnung 112 umfaßt paketierte Metallbleche 120 und Wicklungen 122 und grenzt einen Innenraum ein, in den die Rotoranordnung 114 eingefügt ist. Die Rotoranordnung 114 umfaßt die Motorwelle 126, einen Eisenrückschluß 128 und Permanentmagnete 130. Die Lager 116, 118 für die Lagerung der Rotoranordnung können in einen Flansch 132 des Motorgehäuses 100 integriert sein. Fig. 6 dient der Erläuterung des grundsätzlichen Aufbaus eines Elektromotors. Wie eingangs ausgeführt, betrifft die Erfindung in ihrer bevorzugten Anwendung einen Rotorrückschluß für einen bürstenlosen Gleichstrommotor, wobei die Permanentmagnete in den Rotorrückschluß eingebettet sind.

Rotoren mit eingebetteten Magneten sind im Stand der Technik allgemein bekannt. Eine Rotorkonfiguration mit einer mehrpoligen, speichenartigen Anordnung sich radial erstreckender, eingebetteter Magnete ist z.B. in der EP 0 691 727 A1 gezeigt. Diese Veröffentlichung zeigt mehrere Permanentmagnete, die in Schlitze eingefügt sind, welche in dem Rotorkörper ausgebildet sind, um die Magnete von außen in den Rotorkörper einzuschieben.

Ein Rotorkörper oder Rotorrückschluß zum Aufnehmen der Permanentmagnete wird im Stand der Technik häufig aus einem gestanzten und paketierten Blechstapel oder -paket gebildet, wobei jedes Rückschlußblech weitgehend ringförmig ist und Aussparungen zum Aufnehmen der Permanentmagnete aufweist. Der Rotorkörper wird in der Regel im Preßsitz, mit oder ohne Knife-Edges, auf eine Motorwelle aufgebracht. Es ist auch bekannt, den Rotorkörper und die Welle formschlüssig mit Kunststoff zu umspritzen.

Bei der Herstellung eines solchen Rotorrückschlusses entsteht das Problem, daß bei dem Ausstanzen der einzelnen Rückschlußbleche ein erheblicher Verschnitt entsteht. Ferner kann abhängig von der Gestaltung des Rotorkörpers, insbesondere bei Rotoren mit eingebetteten Magneten, der Innenring des Rotorkörpers so dünn sein, daß für eine Preßverbindung zwischen Rotorkörper und Welle nicht ausreichend Raum oder Materialvolumen vorhanden ist, um die Preßkräfte zuverlässig aufzunehmen.

Es ist die Aufgabe der vorliegenden Erfindung, eine Rotoranordnung für eine elektrische Maschine anzugeben, die die oben beschriebenen Nachteile vermeidet und materialsparend hergestellt, sowie zuverlässig auf eine Welle aufgebracht werden kann.

Diese Aufgabe wird durch eine Rotoranordnung mit den Merkmalen von Anspruch 1 sowie durch ein Verfahren gemäß Anspruch 14 gelöst.

Die Erfindung sieht eine Rotoranordnung für eine elektrische Maschine und insbesondere für einen bürstenlosen Gleichstrommotor mit Innenläuferkonfiguration vor, die einen im wesentlichen zylindrischen Rotorkörper aufweist, der auf eine Welle aufgebracht ist. Erfindungsgemäß ist der Rotorkörper in wenigstens einer die Wellenachse enthaltenden Ebene in mehrere gleiche oder weitgehend gleiche Rotorabschnitte aufgeteilt. In der bevorzugten Ausführung der Erfindung sind diese Rotorabschnitte halbzylinderförmig; im folgenden als Rotorhalbteile bezeichnet. Die Rotorabschnitte oder Rotorhalbteile werden seitlich auf die Welle geschoben und auf der Welle zusammengesetzt. Um eine formschlüssige Verbindung zwischen Welle und Rotorkörper herzustellen, ist die Welle vorzugsweise wenigstens in einem Bereich, in welchem sie Rotorabschnitte aufnimmt, vieleckig, beispielsweise quadratisch, so daß die Rotorabschnitte in diesem Bereich mit der Welle formschlüssig verbunden werden. Der Rotorkörper wird somit aus wenigstens zwei Rotorhalbteilen gebildet, die gemeinsam eine zentrale Öffnung definieren, die mit der Welle formschlüssig in Eingriff kommt. Durch die formschlüssige Verbindung, anstelle der im Stand der Technik üblichen reibschlüssigen Verbindung, zwischen dem Rotorkörper und der Welle kann ohne Vergrößerung des Wellendurchmessers nicht nur eine robustere Verbindung hergestellt werden, sondern auch die Drehmomentübertragung verbessert werden. Stabilitätsprobleme bei dem Aufpressen des Rotors auf die Welle, die im Stand der Technik insbesondere bei kleinen Motoren auftreten, werden vermieden. Der Rotorkörper wird aus mehreren Rotorabschnitten aufgebaut und kann somit aus Blechen hergestellt werden, die mit weniger Verschnitt ausgestanzt werden, da mehr kleinere und im wesentlichen gleichförmig gestaltete Bleche benötigt werden.

Während in der bevorzugten Ausführung der Erfindung der Rotorkörper aus wenigstens einem Paar halbzylinderförmiger Rotorhalbteile aufgebaut wird, kann auch vorgesehen sein, den Rotorkörper in Längsrichtung in mehreren Axialebenen aufzuteilen, beispielsweise in drei Drittelzylinder oder vier Viertelzylinder.

In einer bevorzugten Ausführung der Erfindung wird der Rotorkörper zusätzlich in wenigstens einer radialen Ebene in mehrere Rotorabschnitt-Gruppen aufgeteilt. Benachbarte Rotorabschnitt-Gruppen werden um einen Winkel gegeneinander verdreht auf die Welle aufgebracht. Es kann beispielsweise vorgesehen sein, eine, zwei oder drei Rotorabschnitt-Gruppen, insbesondere Rotorhalbteil-Paare, entlang der Länge der Welle nebeneinander anzuordnen, wobei jeweils die Rotorabschnitte einer Gruppe (bzw. Rotorhalbteile eines Paares) gegenüber der benachbarten Gruppe verdreht sind, um eine gleichmäßigere Verteilung der Walzrichtungen der Rotorbleche zu erhalten.

Es kann auch vorgesehen sein, daß der Rotorkörper aus einer Vielzahl einzelner Rotorblech-abschnitte aufgebaut ist, die entlang der Welle nebeneinander angeordnet und jeweils um einen Winkel gegeneinander versetzt auf die Welle aufgebracht sind. In der bevorzugten Ausgestaltung dieser Ausführungsform sind die einzelnen Rotorblechabschnitte halbkreisförmig, im folgenden als Rotorblech-Halbteile bezeichnet, wobei benachbarte Rotorblech-Halbteilpaare vorzugsweise um einen Winkel von 90 Grad gegeneinander verdreht sind.

Während oben beschrieben wurde, daß die Welle in dem Bereich, in dem sie Rotorabschnitte aufnimmt, vorzugsweise quadratisch ist, eignet sich für die Zwecke der Erfindung jedes Vieleck und insbesondere jedes gleichseitige Vieleck, wie ein Dreieck, Oktaeder, Tetraeder etc. Die Rotorabschnitte weisen eine zentrale Öffnung auf, die eine formschlüssige Verbindung mit der Welle bilden kann. Sofern der Rotorkörper aus mehreren Rotorabschnitt-Gruppen bzw. Rotorhalbteil-Paaren aufgebaut ist, kann auch vorgesehen sein, daß eine formschlüssige Verbindung zwischen Rotorkörper und Welle nur im Bereich einer dieser Gruppen bzw. eines dieser Paare gebildet wird.

Es ist vorgesehen, in die erfindungsgemäße Rotoranordnung Permanentmagnete einzubetten, so daß der Rotorkörper entsprechende Ausnehmungen zum Aufnehmen der Permanentmagnete aufweist.

Nach dem Verbinden der Rotorabschnitte mit der Welle können diese durch Endkappen, ein Rohr, welches über den Rotorkörper geschoben wird, einen oder mehrere Spannringe oder ähnliche Mittel zusammengehalten werden. Diese Verbindungsmittel werden beispielsweise auf den Rotorkörper aufgepreßt.

Der Rotorkörper ist vorzugsweise aus einem ferromagnetischen Material hergestellt und bildet einen Rotorrückschluß. Bei Verwendung geeigneter Permanentmagnete, welche keinen Rückschluß benötigen, z.B. bei einer Halbach-Magnetisierung, kann der Rotorkörper auch aus einem nicht magnetischen Material bestehen. Vorzugsweise wird er jedoch aus ferromagnetischen Blechen aufgebaut.

Die Erfindung sieht auch ein Verfahren zur Herstellung einer Rotoranordnung für eine elektrische Maschine vor. Bei diesem Verfahren werden Rotorbleche zur Bildung eines im wesentlichen zylindrischen Rotorkörpers so ausgestanzt, daß sie in wenigstens einer die Wellenachse enthaltenden Ebene in mehrere Rotorblech-Abschnitte aufgeteilt werden. Die Rotorblech-Abschnitte werden formschlüssig mit der Welle verbunden, wobei die Welle vorzugsweise wenigstens in einem Bereich zum Aufnehmen der Rotorblech-Abschnitte vieleckig, beispielsweise quadratisch, ausgestaltet ist. Vorzugsweise werden die Rotorblech-Abschnitte vor dem Verbinden mit der Welle zu paketierten Blechstapeln zusammengefügt. Es ist jedoch auch möglich, einzelne Rotorblech-Halbteile oder Rotorblechabschnitte auf die Welle aufzubringen und erst nach dem Aufbringen sämtlicher Rotorbleche diese miteinander zu verbinden.

Die Erfindung ist im folgenden anhand bevorzugter Ausführungen mit Bezug auf die Zeichnungen näher erläutert. In den Figuren zeigen:
- Fig. 1a: eine perspektivische, auseinandergezogene Darstellung einer Rotoranordnung gemäß einer ersten Ausführung der Erfindung;
- Fig. 1b: die Rotoranordnung der Fig. 1a in zusammengesetztem Zustand;
- Fig. 2a: eine perspektivische, auseinandergezogene Darstellung einer Rotoranordnung gemäß einer zweiten Ausführung der Erfindung;
- Fig. 2b: die Rotoranordnung der Fig. 2a in zusammengesetztem Zustand;
- Fig. 3a: eine perspektivische, auseinandergezogene Darstellung einer Rotoranordnung gemäß einer dritten Ausführung der Erfindung;
- Fig. 3b: die Rotoranordnung der Fig. 3a in zusammengesetztem Zustand;
- Fig. 4a: eine perspektivische, auseinandergezogene Darstellung einer Rotoranordnung gemäß einer vierten Ausführung der Erfindung;
- Fig. 4b: die Rotoranordnung der Fig. 4a in zusammengesetztem Zustand;
- Fig. 5: eine perspektivische Darstellung zur Erläuterung einer Rotoranordnung gemäß einer fünften Ausführung der Erfindung und
- Fig. 6: eine schematische Darstellung eines Elektromotors, in dem die erfmdungsgemäße Rotoranordnung eingesetzt werden kann.

In den im folgenden beschriebenen Ausführungsbeispielen bildet der Rotorkörper der erfindungsgemäßen Rotoranordnung einen magnetischen Rückschluß und ist aus magnetisch wirksamen (ferromagnetischen) Metallblechen aufgebaut. Ein Fachmann wird jedoch verstehen, daß die Grundsätze der vorliegenden Erfindung auch auf einen nicht magnetischen Rotorkörper anwendbar sind, der nicht aus einzelnen Blechen hergestellt ist und/oder aus einem anderen Material besteht. Werden beispielsweise Magnete mit Halbachmagnetisierung verwendet, welche keinen magnetischen Rückschluß benötigen, so kann der Rotorkörper auch aus Kunststoff, beispielsweise aus Kunststoffspritzteilen, hergestellt sein.

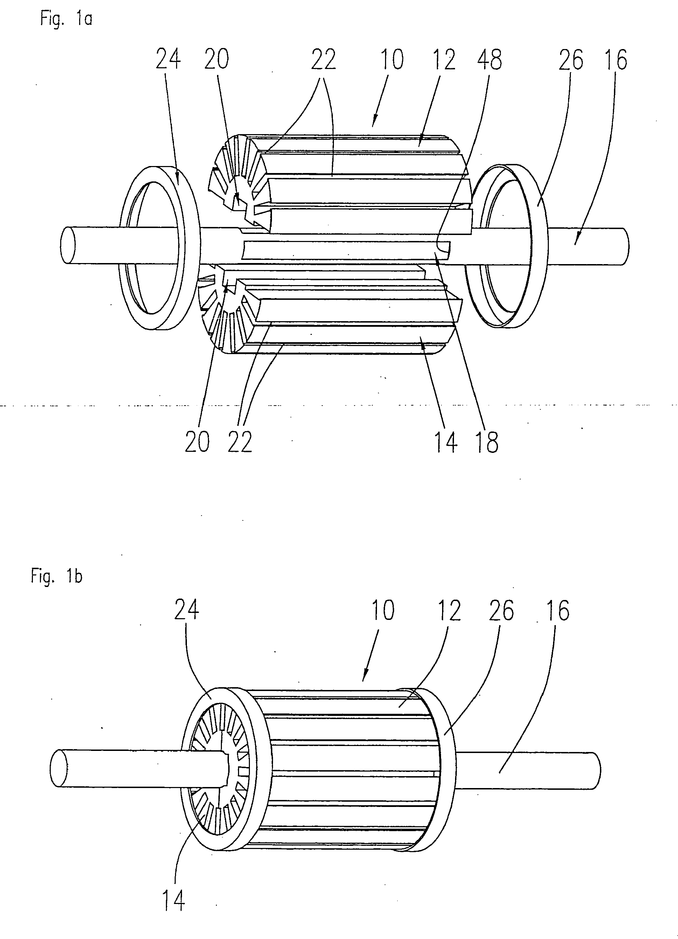

Die Fig. 1a und 1b zeigen eine Rotoranordnung gemäß einer ersten Ausführung der Erfindung in auseinandergezogener bzw. zusammengesetzter Darstellung. In der ersten und einfachsten Ausführung der Erfindung ist ein Rotorkörper 10 aus zwei Halbteilen 12, 14 aufgebaut, welche Rotorabschnitte bilden und gegeneinander auf eine Welle 16 aufgesetzt werden. Die Welle 16 weist in der gezeigten Ausführung in einem Bereich 18, dem die Rotorabschnitte 12, 14 aufgesetzt werden, einen quadratischen Querschnitt auf. Der Bereich 18 könnte auch in Form jedes beliebigen anderen Polygons, jedoch vorzugsweise in Form eines gleichseitigen Vielecks, gestaltet sein. Aus der Figur ist erkennbar, daß ein vieleckiger Querschnitt der Welle auch solche Querschnitte umfaßt, bei denen die Ecken des Vielecks außerhalb des Wellendurchmessers liegen, so daß die Ecken des Vielecks durch den Umfang der Welle beschnitten sind. Der Bereich 18 kann durch Bearbeiten einer an und für sich runden Welle 16 gebildet werden, wobei der vieleckige Querschnitt vorzugsweise in die Welle eingearbeitet wird und nicht größer ist als der Durchmesser der Ausgangswelle. Als Beispiele für Bearbeitungstechniken zum Ausbilden des vieleckigen Bereichs 18 seien materialabtragende Fertigungsverfahren sowie Kaltumformungstechnik genannt. Da der vieleckige Querschnitt in die Welle eingeformt ist, gewährleistet er nicht nur eine formschlüssige Verbindung der Welle mit dem Rotorkörper, sondern ermöglicht auch eine axiale Positionierung des Rotorkörpers auf der Welle, indem an den axialen Enden des Bereichs 18 Formschlußschultern 48 gebildet sind.

Die Rotorabschnitte 12, 14 grenzen gemeinsam eine zentrale Öffnung 20 des Rotorkörpers ein, deren Form an das Profil des Bereichs 18 angepaßt ist, um die Rotorabschnitte 12, 14 mit der Welle 16 formschlüssig zu verbinden.

In der gezeigten Ausführung weisen die Rotorabschnitte 12, 14 Nuten 22 zum Aufnehmen von Permanentmagneten, welche in den Rotorkörper 10 eingebettet werden, auf. Die Rotorabschnitte 12, 14 sind vorzugsweise als laminierte Blechstapel aufgebaut, wobei die etwa halbkreisförmigen Bleche zunächst zur Bildung eines Halbteils 12 oder 14 verbunden und anschließend auf die Welle 16 aufgesetzt werden. Nach dem Zusammensetzen des Rotorkörpers 10 auf der Welle 16 wird dieser in der gezeigten Ausführung von Endkappen 24, 26 zusammengehalten. Diese können einfach auf die Stirnenden des Rotorkörpers 10 aufgeschoben oder aufgepreßt und mit diesen verklebt werden. Dabei sollte beachtet werden, daß die Endkappen 24, 26 in einen magnetisch unbedenklichen Bereich der Rotoranordnung gelegt werden.

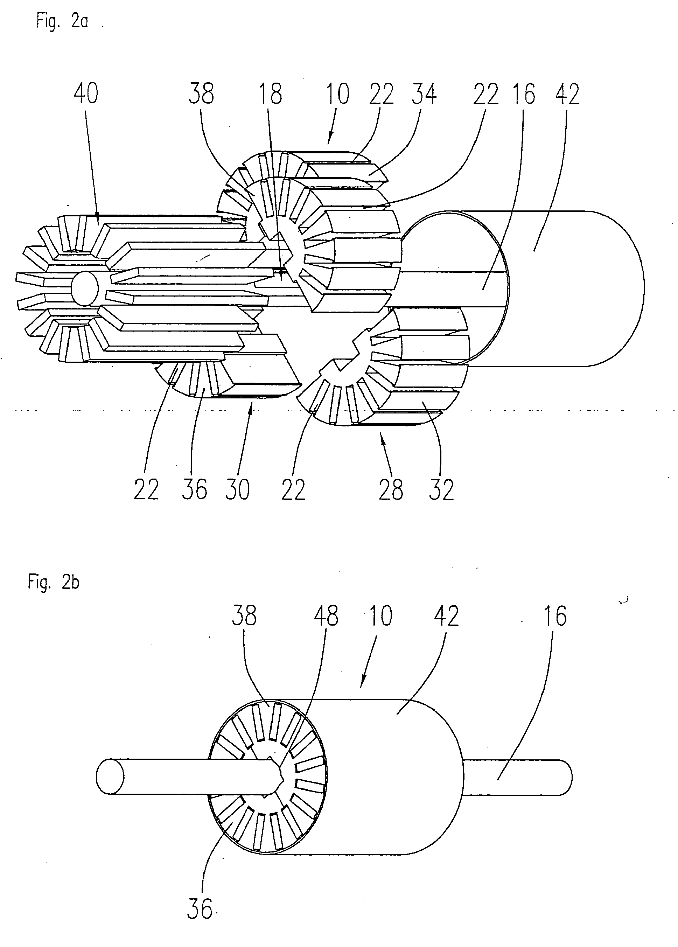

Fig. 2a und 2b zeigen eine weitere Ausführung der erfindungsgemäßen Rotoranordnung. Bei der in den Fig. 2a und 2b gezeigten Ausführung ist der Rotorkörper 10 aus zwei Gruppen 28, 30 aus Rotorabschnitten 32, 34, 36, 38, oder genauer aus zwei Paaren aus Rotor-Halbteilen aufgebaut. Während die Rotor-Halbteile 32, 34, 36, 38 eines Paares 28 bzw. 30 jeweils entlang einer die Wellenachse enthaltenden Ebene geteilt sind, werden die beiden Paare 28, 30 durch eine Radialebene getrennt. Die Rotor-Halbteile 32, 34 und 36, 38 der benachbarten Paare 28, 30 sind jeweils um einen Winkel versetzt auf die Welle 16 aufgebracht. Bei der gezeigten Ausführung wird jedes Paar 28, 30 durch zwei Rotor-Halbteile 32, 34 und 36, 38 gebildet, wobei die Rotor-Halbteile 32, 34 des einen Paares 28 gegenüber den Rotor-Halbteilen 36, 38 des anderen Paares 30 um ungefähr 90 Grad versetzt sind. Es kann auch vorgesehen sein, innerhalb jeder Gruppe mehr als zwei Rotorabschnitte, beispielsweise drei oder vier Rotorabschnitte vorzusehen. In diesem Fall würden benachbarte Gruppen um einen entsprechend geringeren Winkel gegeneinander verdreht werden.

Wie in der Ausführung der Fig. 1a und 1b ist die Welle 16 in dem Bereich, in dem sie die Rotorabschnitte 32 bis 38 aufnimmt, mit einem quadratischen oder anders vieleckigen Querschnitt ausgebildet. Die Rotorabschnitte 32, 34 und 36, 38 werden somit formschlüssig gegeneinander auf die Welle 16 aufgesetzt.

Wie in der Ausführung der Fig. 1a und 1b weisen die Rotorabschnitte Nuten 22 zum Aufnehmen von Permanentmagneten auf. Die Permanentmagnete 40 werden in axialer Richtung in die Nuten 22 eingeschoben, nachdem die Rotorabschnitte 32 bis 38 auf die Welle 16 aufgebracht wurden. Der so zusammengesetzte Rotorkörper 10 wird durch ein Rohr 42 zusammengehalten, welches in axialer Richtung auf den Rotorkörper 10 aufgeschoben bzw. aufgepreßt werden kann.

Die Rotorabschnitte 32, 34 und 36, 38 der zwei Gruppen 28, 30 sind jeweils aus Blechpaketstapeln aufgebaut und werden vorzugsweise um 90 Grad versetzt zueinander auf der Welle 16 angeordnet, um die magnetischen Vorzugsrichtungen der Blechstapel auszugleichen und magnetische Unsymmetrien aufgrund des Wälzvorgangs sowie durch Nahtstellen innerhalb jeder Rotorabschnitt-Gruppe soweit wie möglich zu vermeiden.

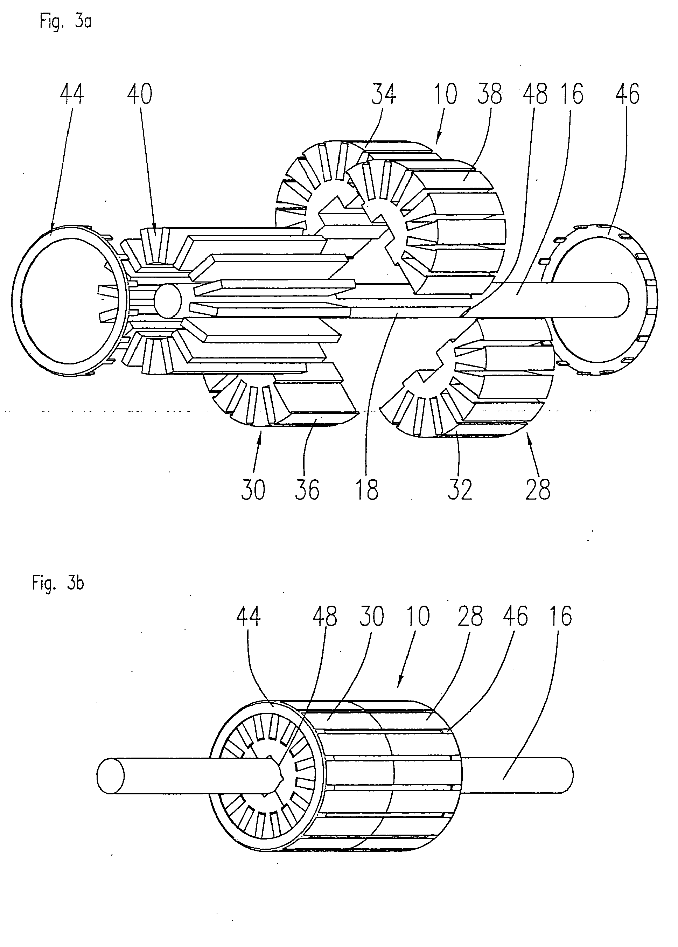

Fig. 3a und 3b zeigen eine weitere Ausführung der erfindungsgemäßen Rotoranordnung, die zu der Ausführung der Fig. 2a und 2b weitergehend identisch ist, wobei jedoch anstelle des Rohres 42 Fingerendkappen 44, 46 zum Verbinden des Rotorkörpers 10 verwendet werden.

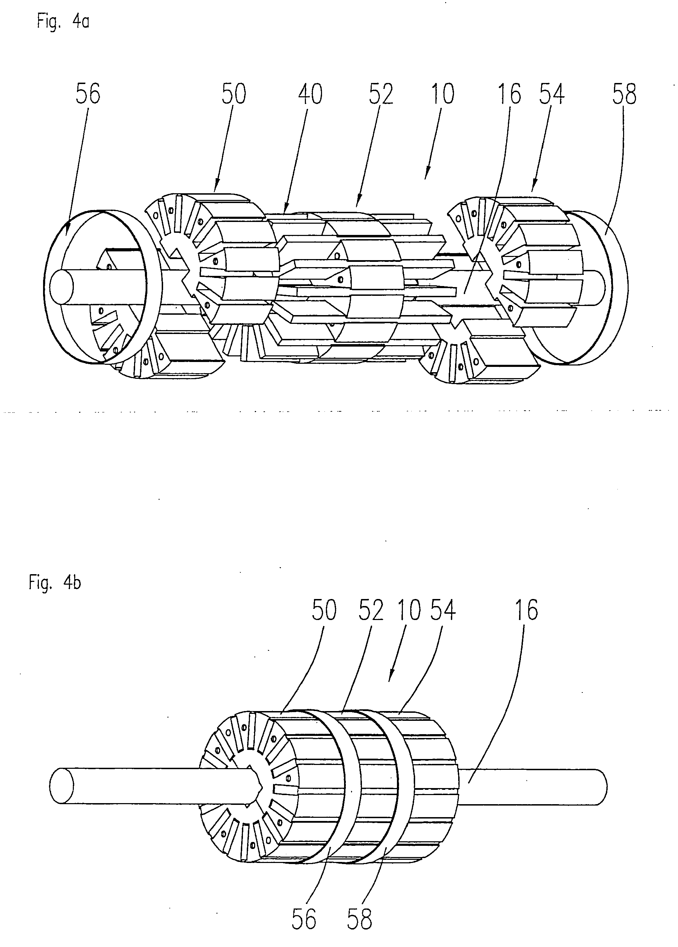

Fig. 4a und 4b zeigen eine weitere Ausführung der erfindungsgemäßen Rotoranordnung. In dieser Ausführung ist der Rotorkörper aus drei Rotor-Halbteilpaaren 50, 52, 54 aufgebaut. Jedes Rotor-Halbteilpaar 50, 52, 54 besteht aus zwei Rotorabschnitten oder Rotorhalbteilen, die gegeneinander auf die Welle 16 aufgesetzt sind. Wie in den Fig. 1a bis 3b weist die Welle einen Bereich mit vieleckigem Querschnitt auf, wobei dieser Bereich sich wenigstens über die axiale Länge des mittleren Rotor-Halbteilpaares 52, vorzugsweise jedoch über die axiale Länge sämtlicher Rotorhalbteilpaare 50 bis 54 erstreckt. Die beiden äußeren Rotor-Halbteilpaare 50, 54 sind so angeordnet, daß sie miteinander fluchten und gegenüber dem mittleren Rotor-Halbteilpaar 52 um 90 Grad versetzt sind. Durch diese symmetrische Anordnung wird das Einfügen der Permanentmagnete 40 in die Nuten der Rotorabschnitte bzw. Rotor-Halbteile erleichtert, weil die Gefahr eines Verkantens der Magnete zwischen den Halbteilpaaren 50, 52, 54 minimiert wird.

Die in Fig. 4a gezeigte Rotoranordnung 10 wird nach dem Aufbringen der Rotorhalbteilpaare 50 bis 54 auf die Welle 16 und dem Einführen der Permanentmagnete 40 durch Spannringe 56, 58 zusammengehalten. Die Spannringe können ähnlich wie das Rohr 42 in Fig. 2a und 2b auf den Rotorkörper 10 aufgepreßt werden.

Wie in den vorhergehenden Ausführungen haben auch bei der Ausführung der Fig. 4a und 4b sämtliche Rotorabschnitte bzw. Rotor-Halbteile die gleiche geometrische Form und können aus identischen Blechschnitten hergestellt werden. Eine Abweichung von diesem Prinzip ist allenfalls dann gegeben, wenn nur eines der Rotor-Halbteilpaare, vorzugsweise das mittlere Rotor-Halbteilpaare 52, mit der Welle 16 formschlüssig verbunden ist, und die Welle 16 im Bereich der anderen beiden Rotor-Halbteilpaare rund ist.

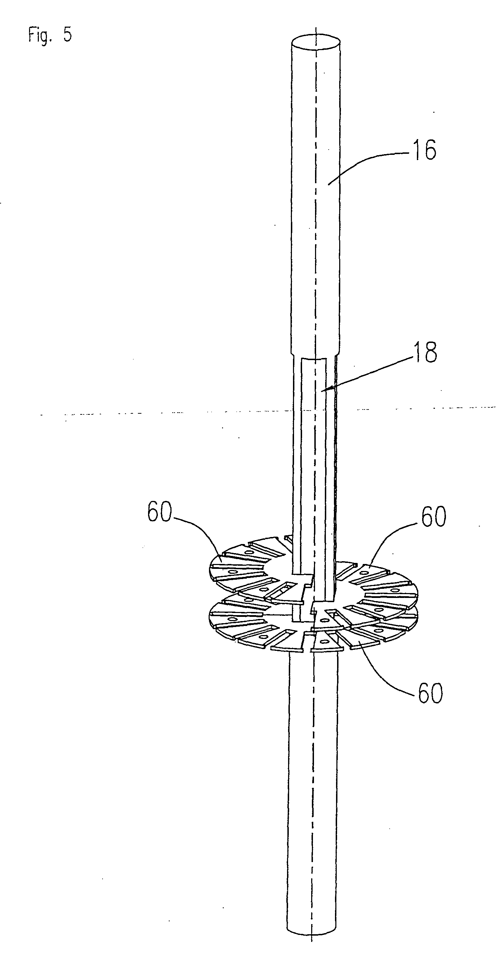

Noch eine weitere Ausführung der Erfindung ist schließlich in Fig. 5 gezeigt. Fig. 5 zeigt die Welle 16 mit quadratischem Querschnitt in dem Bereich 18 zum Aufbringen der Rotorabschnitte. In der Ausführung der Fig. 5 wird der Rotorkörper 10 aus einzelnen Rotorblechen 60 aufgebaut, die jeweils als Rotorblech-Halbteilpaare in dem Bereich 18 auf die Welle 16 aufgesetzt, gestapelt und miteinander verbunden werden. Dabei ist jeweils ein Rotorblech-Halbteilpaar gegenüber dem benachbarten Rotorblech-Halbteilpaar vorzugsweise um 90 Grad verdreht. Das Verbinden der Rotorbleche 60 kann wie bei einem üblichen Blechstapelprozeß durch Verklinken, Verpressen oder dergleichen durchgeführt werden.

In der Ausführung der Fig. 5 hat jedes Rotorblech-Halbteil 60 im wesentlichen die Form eines Halbkreises mit Nuten zum Einbringen der Permanentmagnete und mit einer zentralen Öffnung, die an den Querschnitt der Welle 16 in dem Bereich 18 angepaßt ist. Insofern entspricht jedes Rotorblech-Halbteilpaar, das aus zwei Rotorblech-Halbteilen 60 gebildet ist, einem der Rotorabschnitte oder Rotor-Halbteile der vorhergehenden Ausführungen. Ebenso wie in den vorhergehenden Ausführungen ist es möglich, den Rotorkörper entlang mehrerer Axialebenen in mehrere gleiche Rotorblechabschnitte aufzuteilen, die auf der Welle 16 zusammengefügt werden.

In jeder der bevorzugten Ausführungen wird der Rotorkörper aus einem oder mehreren Blechstapeln aufgebaut. Abweichend von der Ausführung der Fig. 5 werden jedoch bevorzugt zunächst mehrere Bleche zu einem Rotorabschnitt zusammengefügt und anschließend die Rotorabschnitte auf der Welle 16 zusammengesetzt.

In der Ausführung der Fig. 5 wird der aus den Rotorblech-Halbteilen 60 aufgebaute Rotorkörper nach dem Einfügen der Permanentmagnete zweckmäßig durch ein Rohr (nicht gezeigt) zusammengehalten. Die gegeneinander und um 90° versetzten Halbbleche werden vorzugsweise miteinander verstemmt oder verklinkt.

Die Erfindung ermöglicht eine sichere Verbindung und gute Drehmomentübertragung zwischen Rotor und Welle auch bei kleinen Motoren, bei denen eine Preßverbindung bisher kritisch war. Dies wird durch einen Formschluß zwischen Rotor und Welle erreicht, indem die Welle in dem Bereich, in dem der Rotorkörper aufgesetzt wird, nach Art eines Vielkantes ausgebildet ist.

Durch den mehrteiligen Aufbau des Rotorkörpers können die zur Bildung des Rotorkörpers notwendigen Bleche mit geringerem Materialverlust ausgestanzt werden.

Die Rohre, Spannringe oder Endkappen, welche zum Verbinden und Zusammenhalten des Rotorkörpers dienen, können aufgepreßt oder auf den Rotorkörper aufgeschrumpft werden. Sie können aus einem magnetischen oder unmagnetischen Material bestehen, etwa aus Aluminium, Kunststoff oder Edelstahl. Zusätzlich oder alternativ ist es möglich, den Rotor insgesamt mit Kunststoff zu umspritzen. Die Magnete können in den Rotorkörper eingeklebt werden, und auch die Rotorabschnitte jeweils einer Gruppe bzw. Rotor-Halbteile jeweils eines Paares können zunächst durch Kleben zusammengehalten werden.

Die in der vorstehenden Beschreibung, den Ansprüchen und den Zeichnungen offenbarten Merkmale können sowohl einzeln als auch in beliebiger Kombination für die Verwirklichung der Erfindung in den verschiedenen Ausführungen von Bedeutung sein.

### Bezugszeichenliste

- 10: Rotorkörper
- 12, 14: Rotorabschnitte, Rotor-Halbteile
- 16: Welle
- 18: Bereich mit quadratischem Querschnitt
- 20: zentrale Öffnung
- 22: Nuten, Ausnehmungen
- 24,26: Endkappen
- 28, 30: Gruppen, Paare
- 32, 34, 36, 38: Rotorabschnitte, Rotor-Halbteile
- 40: Permanentmagnete
- 42: Rohr
- 44, 46: Fingerendkappen
- 48: Formschlußschultern
- 50, 52, 54: Rotor-Halbteilpaare
- 56,58: Spannring
- 60: Rotorblech-Halbteile
- 100: Gehäuse
- 112: Statoranordnung
- 114: Rotoranordnung
- 116, 118: Lager
- 120: Metallbleche
- 122: Wicklungen
- 126: Motorwelle
- 128: Rückschluß
- 130: Permanentmagnete
- 132: Flansch

## Patentansprüche

1. Rotoranordnung für eine elektrische Maschine mit
einem im wesentlichen zylindrischen Rotorkörper (10) zum Aufnehmen von Permanentmagneten und einer Welle (16), auf die der Rotorkörper (10) aufgebracht ist, wobei
der Rotorkörper (10) entlang wenigstens einer die Wellenachse enthaltenden Ebene in Längsrichtung in mindestens zwei im wesentlichen gleiche Rotorabschnitte (12, 14; 32, 34, 36, 38; 60) aufgeteilt ist, die jeweils mehrere Rotorpole aufweisen, und wobei
der Umfang der Welle (16) einen Bereich (18) zum Aufnehmen von Rotorabschnitten aufweist, wobei die Rotorabschnitte (12, 14; 32, 34, 36, 38; 60) mit der Welle (16) formschlüssig verbunden sind.

2. Rotoranordnung nach Anspruch 1, **dadurch gekennzeichnet, daß** der Rotorkörper (10) zusätzlich in wenigstens einer Radialebene in mehrere Rotorabschnitt-Gruppen (28, 30; 50, 52, 54) aufgeteilt ist.

3. Rotoranordnung nach Anspruch 2, **dadurch gekennzeichnet, daß** die Rotorabschnitte (32, 34, 36, 38; 60) benachbarter Rotorabschnitt-Gruppen (28, 30; 50, 52, 54) um einen Winkel gegeneinander versetzt auf die Welle (16) aufgebracht sind.

4. Rotoranordnung nach einem der vorangehenden Ansprüche, **dadurch gekennzeichnet, daß** die Rotorabschnitte (12, 14; 32, 34, 36, 38; 60) als halbzylinderförmige Rotor-Halbteile ausgebildet sind.

5. Rotoranordnung nach Anspruch 4, **dadurch gekennzeichnet, daß** der Rotorkörper (10) aus zwei oder drei entlang der Länge der Welle nebeneinander angeordneten Rotorhalbteil-Paaren (28, 30) gebildet ist, die um 90° gegeneinander versetzt auf die Welle (16) aufgebracht sind.

6. Rotoranordnung nach einem der vorangehenden Ansprüche, **dadurch gekennzeichnet, daß** der Umfang der Welle (16) in dem Bereich zum Aufnehmen des Rotors einem Vieleck, insbesondere einem Quadrat, entspricht und die Rotorabschnitte in diesem Bereich (18) mit der Welle (16) formschlüssig verbunden sind.

7. Rotoranordnung nach einem der vorangehenden Ansprüche, **dadurch gekennzeichnet, daß** die Rotorabschnitte (12, 14; 32, 34, 36, 38; 60) nach der Verbindung mit der Welle (16) durch Endkappen (24, 26; 44, 46), ein Rohr (42), das über den zusammengesetzten Rotorkörper (10) geschoben wird, oder einen oder mehrere Spannringe (56, 58) zusammengehalten werden.

8. Verfahren zur Herstellung einer Rotoranordnung für eine elektrische Maschine, bei dem ein im wesentlichen zylindrischer Rotorkörper (10) aus mehreren im wesentlichen gleichen Rotorabschnitten (12, 14; 32, 34, 36, 38; 60) aufgebaut und auf eine Welle (16) aufgebracht wird, wobei der Rotorkörper (10) Permanentmagnete aufnimmt, wobei Rotorbleche so ausgestanzt werden, daß sie entlang wenigstens einer die Wellenachse enthaltenden Ebene in Längsrichtung in mindestens zwei Rotorblech-Abschnitte aufgeteilt werden, die jeweils mehrere Rotorpole aufweisen, und die Rotorblech-Abschnitte formschlüssig mit der Welle (16) verbunden werden, wobei der Umfang der Welle (16) einen Bereich (18) zum Aufnehmen von Rotorblech-Abschnitten aufweist.

9. Verfahren nach Anspruch 8, **dadurch gekennzeichnet, daß** der Rotorkörper (10) aus mehreren Rotorabschnitt-Gruppen (28, 30; 50, 52, 24), die in Längsrichtung des Rotorkörpers (10) nebeneinander liegen, aufgebaut wird, wobei
die Rotorabschnitte (12, 14; 32, 34, 36, 38; 60) benachbarter Rotorabschnitt-Gruppen (28, 30; 50, 52, 24) um einen Winkel gegeneinander versetzt auf die Welle (16) aufgebracht werden.

10. Verfahren nach einem der Ansprüche 8 bis 9, **dadurch gekennzeichnet, daß** die Rotorblech-Abschnitte (60) oder Rotorabschnitte (12, 14; 32, 34, 36, 38; 60) nach der Verbindung mit der Welle durch Endkappen (24, 26; 44, 46), ein Rohr (42), das über den zusammengesetzten Rotorkörper (10) geschoben wird, oder einen oder mehrere Spannringe (56, 58) zusammengehalten werden.
